# EUROPÄISCHE PATENTSCHRIFT

(11) **EP 2 236 187 B1**
(45) Veröffentlichungstag und Bekanntmachung des Hinweises auf die Patenterteilung: **08.02.2012**
(21) Anmeldenummer: 10167127.9
(22) Anmeldetag: 20.12.2006
(51) Int. Cl.: B01D 46/24

(54) **Luftfilter und Filtereinsatz**
Air filter and filter insert
Filtre à air et élément filtrant

(30) Priorität: 23.12.2005 DE 202005020099 U
(43) Veröffentlichungstag der Anmeldung: 06.10.2010
(62) Teilanmeldung aus: 06026387.8
(73) Patentinhaber: Hengst GmbH & Co. KG, 48147 Münster (DE)
(72) Erfinder: Borgmann, Marcel, 48329, Havixbeck (DE)
(74) Vertreter: Linnemann, Winfried

(56) Entgegenhaltungen:
- EP-A1- 0 470 330
- WO-A-01/91884
- DE-A1- 19 638 790
- US-A1- 2002 116 909

## Beschreibung

Die vorliegende Erfindung betrifft einen Luftfilter, insbesondere für die Ansaugluft einer Brennkraftmaschine, mit einem Filtergehäuse mit einem abnehmbaren Gehäusedeckel und mit einem im Filtergehäuse angeordneten, austauschbaren Filtereinsatz, der aus zwei Stirnscheiben und einem zwischen diesen angeordneten, hohlzylindrischen Filterstoffkörper besteht, wobei der Filtereinsatz an einem ersten Stirnende an einem luftführenden Anschlussstutzen lösbar gehaltert ist, wobei an einem zweiten Stirnende mindestens eine Lasche vorgesehen ist, die am Filtergehäuse lösbar festgelegt ist, wobei die Lasche an ihrem gehäuseseitigen Ende ein Halteelement aufweist, das durch Schließen des Luftfilters werkzeuglos mit einem Gegenhalteelement am Filtergehäuse mittels Form- und/oder Kraftschluss in Halteeingriff und durch Öffnen des Luftfilters werkzeuglos außer Halteeingriff mit dem Gegenhalteelement gelangt, wobei das Gegenhalteelement teils am Gehäusedeckel und teils am übrigen Filtergehäuse angeordnet ist, und wobei das Halteelement im geschlossenen Zustand des Luftfilters zwischen dem Gehäusedeckel und dem übrigen Filtergehäuse durch Form- und/oder Kraftschluss fixiert ist. Außerdem betrifft die Erfindung einen Filtereinsatz für den Luftfilter.

Das Dokument WO01/91884 A zeigt einen Luftfilter der vorstehend angegebenen Art. Bei diesem bekannten Luftfilter ist am ersten Stirnende, also an dem am Anschlussstutzen, d.h. am Reinluftauslass, liegenden Stirnende des Filtereinsatzes eine Lasche vorgesehen, die am Filtergehäuse lösbar festgelegt ist. Eine Fixierung des Filtereinsatzes an seinem ersten, anschlussstutzenseitigen Ende erfolgt durch ein Zusammenwirken von Elementen am Filtereinsatz, am Filtergehäuse und am Filtergehäusedeckel, wobei der Eingriff der Elemente durch Anbringen des Deckel hergestellt und durch Abnehmen des Deckels aufgehoben wird. Zum Zweck der Fixierung des anderen, anschlussstutzenfernen Endes des Filtereinsatzes ist hier an dessen zweitem Stirnende ein zentraler axialer zylindrischer Fortsatz vorgesehen, der in eine holzylindrische Führung eingreift, die innenseitig am Filtergehäuse ausgebildet ist. Somit wird hier am anschlussstutzenfernen Ende des Filtereinsatzes eine radiale Zentrierung des Filtereinsatzes mit axialem Spiel bewirkt. Der Filtergehäusedeckel ist an dieser Zentrierung nicht beteiligt.

Das Dokument EP A1-0 470 330 zeigt einen weiteren Ansaugluftfilter der eingangs genannten Art. Der Filtereinsatz weist hier mindestens ein Befestigungselement auf, welches in die Verbindungsstelle zwischen Gehäuse und Deckel eingreift. Somit bewirkt ein Befestigen des Deckels an dem Gehäuse gleichzeitig ein Befestigen des Filtereinsatzes und damit eine axiale und radiale Sicherung des Filtereinsatzes.

Bei beiden vorstehend erläuterten Luftfiltern muss der Filtereinsatz zunächst unmittelbar im Filtergehäuse an dem Anschlussstutzen angebracht werden; anschließend wird das Filtergehäuse durch den separaten Gehäusedeckel verschlossen.

Die DE 40 18 655 A1 zeigt einen Luftfilter mit einem Filtergehäuse und einem dazu ver-schwenkbaren Gehäusedeckel. Mit dem Deckel ist der Filtereinsatz lösbar verbunden. Die Verbindung besteht hier aus einem mit einem Spannschloss ausgestatteten Spanngurt, der manuell zu betätigen ist, wobei der Spanngurt mit einer zweiten Stirnscheibe des Filtereinsatzes an der von einem Reinluftstutzen entfernten Seite zusammenwirkt. Die Handhabung ist hier erkennbar umständlich.

Die US 2002/0 116 909 A1 zeigt einen Luftfilter, bestehend aus einem Filtergehäuse mit abnehmbarem Deckel und einem Filtereinsatz, wobei der Deckel einen Reinluftstutzen umfasst. Am Deckel ist ein Halter verschwenkbar angebracht, der in seiner Haltestellung den Filtereinsatz im Deckel fixiert und in seiner Lösestellung den Filtereinsatz freigibt. Der Halter wirkt dabei mit einer zweiten Stirnscheibe zusammen, die von einer ersten Stirnscheibe, die mit dem Reinluftstutzen verbunden ist, entfernt liegt. Die Einheit aus Deckel und Filtereinsatz ist mit dem Filtergehäuse verbindbar, wobei im verbundenen Zustand der Halter durch das Filtergehäuse in seiner Haltestellung fixiert ist. Der Filtereinsatz braucht für sein Zusammenwirken mit dem Halter eine zweite Stirnscheibe, die eine Durchbrechung aufweist, wobei im zusammengebauten Zustand der Halter die Durchbrechung luftdicht abdichten muss. Zur Gewährleistung dieser Abdichtung ist eine genaue Fertigung mit geringen Toleranzen bei Filtereinsatz und Halter nötig, was die Herstellung verteuert.

Die US 6 162 271 A zeigt einen Luftfilter mit einem Gehäuse mit Deckel und einem Filtereinsatz. An seinem einen Ende sitzt der Filtereinsatz mit einer ersten Stirnscheibe auf einem Reinluftstutzen; an seinem anderen Ende wird er von einem Halter fixiert. Der Halter ist in Längsrichtung des Filtereinsatzes verschieblich am Gehäuse geführt und kann somit durch manuelles Verschieben in und außer Eingriff mit dem Filtereinsatz gebracht werden. Am Deckel sind mit dem Halter zusammenwirkende Teile vorgesehen, die bei außer Eingriff mit dem Filtereinsatz befindlichem Halter das Schließen des Deckels verhindern. Nur bei korrektem Eingriff des Halters mit dem Filtereinsatz kann der Deckel geschlossen werden und fixiert dann den Halter in seiner Eingriffstellung. Der Fertigungs-, Montage- und Handhabungsaufwand ist bei diesem Luftfilter ungünstig hoch, was die Fertigung verteuert und die Handhabung umständlich macht.

Ein Luftfilter und ein Filtereinsatz der vorstehend genannten Art sind außerdem aus der Praxis, insbesondere der Luftfilterung für Brennkraftmaschinen, bekannt. Bei dieser aus der Praxis bekannten Lösung ist in der Lasche eine Bohrung vorgesehen. Deckungsgleich mit dieser Bohrung liegt im Filtergehäuse eine zweite Bohrung, in welche durch die Bohrung in der Lasche hindurch eine Befestigungsschraube eindrehbar ist. Auf diese Weise kann der Filtereinsatz im Bereich seiner zweiten Stirnscheibe über die Lasche und mittels der eingedrehten Schraube in seiner Lage gesichert und vor schädlichen Schwingungen in diesem Bereich geschützt werden. Nachteilig ist bei diesem aus der Praxis bekannten Stand der Technik allerdings, dass für die Herstellung der Verbindung zwischen der Lasche und dem Filtergehäuse jeweils die Schraube eingedreht werden muss. Die Schraube muss bei jeder Wartung des Luftfilters mit einem Filtereinsatzwechsel zunächst aus ihrer Bohrung herausgedreht und nach Einsetzen eines frischen Filtereinsatzes durch die Bohrung in der Lasche hindurch in die Bohrung im Filtergehäuse erneut eingedreht werden. Dies führt zu einer umständlichen und zeitraubenden Handhabung. Außerdem besteht hier leicht die Gefahr, dass die Schraube verlorengeht, z.B. unbeabsichtigt in das Filtergehäuse fällt und darin in einen Bereich gelangt, wo sie erst nach erneutem Entnehmen des Filtereinsatzes für eine Bedienungsperson erreichbar ist. Außerdem besteht erfahrungsgemäß das Risiko, dass das Eindrehen der Schraube im Bereich der Lasche bei der Wartung des Luftfilters gelegentlich unterbleibt, wodurch eine sichere Fixierung des Filtereinsatzes im Filtergehäuse nicht mehr gewährleistet ist und die Gefahr entsteht, dass Schwingungen des Filtergehäuses und des Filtereinsatzes zu einer Lockerung des Filtereinsatzes von seinem Anschlussstutzen oder zu einer Beschädigung des Filterstoffkörpers und damit zu einem Verlust der Filterwirkung führen.

Für die vorliegende Erfindung stellt sich deshalb die Aufgabe, einen Luftfilter und einen Filtereinsatz der eingangs genannten Art zu schaffen, die die vorstehend dargelegten Nachteile vermeiden und mit denen gewährleistet ist, dass bei kostengünstiger Herstellbarkeit das Ein- und Ausbauen eines Filtereinsatzes schnell und einfach durchführbar ist, dass dabei gleichzeitig eine sichere Festlegung der Lasche mit möglichst geringem Montageaufwand erzielt wird und dass ein Ausgleich von Maßtoleranzen möglich ist.

Die Lösung des den Luftfilter betreffenden Teils der Aufgabe gelingt erfindungsgemäß mit einem Luftfilter der eingangs genannten Art, der dadurch gekennzeichnet ist, dass das Halteelement an der Lasche zwei voneinander beabstandete Halteköpfe aufweist, dass ein gehäuseseitiger Teil des Gegenhalteelements zwei mulden-oder keilnutförmige Eintiefungen zur Aufnahme der Halteköpfe aufweist und dass ein deckelseitiger Teil des Gegenhalteelements einen Andruckarm umfasst, der bei geschlossenem Gehäusedeckel die Halteköpfe in die Eintiefungen drückt.

Vorteilhaft wird mit der Erfindung eine Halterung des Halteelementes der Lasche durch Form- und/oder Kraftschluss erreicht, die einerseits besonders einfach und andererseits besonders wirksam ist, so dass hier mit einem geringen technischen Aufwand das gewünschte Ziel erreicht wird. Damit ist gewährleistet, dass bei jeder Wartung des Filtergehäuses mit Einsetzen eines frischen Filtereinsatzes dieser frische Filtereinsatz sicher und zuverlässig festgelegt und so gegen schädliche Schwingungen geschützt wird. Dabei ist für die Herstellung der Festlegung mittels der Lasche keinerlei zusätzlicher Montageaufwand erforderlich, was zu einer sowohl einfachen als auch schnellen Handhabung beiträgt. Außerdem können praktisch keine durch Nachlässigkeit von Bedienungspersonal hervorgerufenen Fehler bei der Festlegung der Lasche mehr auftreten, da für das Festlegen und Lösen der Lasche keinerlei Werkzeug oder sonstige Hilfsmittel, wie lose Schrauben, mehr benötigt werden. Außerdem wird eine exakte Positionierung der Halteköpfe in den Eintiefungen erzielt, womit eine definierte Lage des Filtereinsatzes, insbesondere seiner zweiten Stirnscheibe, innerhalb des Filtergehäuses gewährleistet ist. Dabei wird diese gewünschte exakte Lage auch erreicht, wenn zunächst die Halteköpfe nicht exakt zu den Eintiefungen positioniert werden, weil durch den Gehäusedeckel die Halteköpfe in die Eintiefungen gedrückt und somit abschließend exakt positioniert und fixiert werden.

Bevorzugt haben die Halteköpfe jeweils die Form eines Zylinders und weisen eine gemeinsame Längsmittelachse auf. Mit den so gestalteten Halteköpfen wird die Möglichkeit geschaffen, dass die Lasche in dem Gegenhalteelement eine ausreichende Verschwenkungsfreiheit behält, um auftretende Toleranzen des Filtereinsatzes zwangfrei ausgleichen zu können. Diese Toleranzen treten beispielsweise bei der Fertigung oder im Betrieb des Luftfilters, z.B. durch wechselnde Feuchtigkeit des Filterstoffkörpers, auf. Dabei ist die Verschwenkung auch bei ansonsten spielfreiem Eingriff möglich, wobei das Halte- und Gegenhalteelement wie ein Scharnier zusammenwirken.

Zweckmäßig verläuft die gemeinsame Längsmittelachse der beiden Halteköpfe senkrecht zu einer Längsrichtung der Lasche und senkrecht zu einer Längsmittelachse des Filtereinsatzes. In dieser Anordnung können Längentoleranzen des Filtereinsatzes besonders gut aufgenommen werden.

Zwecks einer möglich einfachen und kostengünstigen Fertigung ist bevorzugt vorgesehen, dass die Lasche einstückig mit dem Filtereinsatz, vorzugsweise mit einer Stirnscheibe am zweiten Stirnende des Filtereinsatzes, ausgebildet ist.

Alternativ kann die Lasche als separates Einzelteil hergestellt und mit dem Filtereinsatz verbunden sein. Hier besteht die Möglichkeit, die Lasche und den Filtereinsatz, z.B. dessen Stirnscheibe, aus unterschiedlichen, in ihren Eigenschaften dem jeweiligen Zweck am besten entsprechenden Materialien herzustellen.

Bevorzugt ist der Halteeingriff zwischen Halteelement und Gegenhalteelement als spielfreier Eingriff ausgeführt, wobei der Andruckarm in einem zwischen den Halteköpfen liegenden Bereich, bevorzugsweise mittig zwischen den beiden Halteköpfen, auf das Halteelement drückt. Hiermit wird sichergestellt, dass von den Halteelementen keine störenden Geräusche im Betrieb des Luftfilters ausgehen. Außerdem wird so ein Abrieb im Bereich von Halteelement und Gegenhalteelement vermieden, der ansonsten zu einem mit der Zeit zunehmenden und möglicherweise die Funktion beeinträchtigenden Verschleiß führen würde. In dieser Ausgestaltung wird auch ein Toleranzausgleich zwischen dem Filtergehäuse, dem Gehäusedeckel und dem Halte- und Gegenhalteelement geschaffen, indem hier die Möglichkeit besteht, dass ein zwischen den Halteköpfen liegender Bereich der Lasche federnd durch den Andruckarm durchgebogen wird, wobei das Maß der Durchbiegung von der Größe der jeweiligen Toleranz abhängt.

Erfindungsgemäß wird weiter vorgeschlagen, dass der Anschlussstutzen im Gehäusedeckel vorgesehen ist und dass ein am Gehäusedeckel angeordneter Teil des Gegenhalteelements ein Rast- oder Klemmelement umfasst, das mit der Lasche oder deren Halteelement in lösbaren Rast- oder Klemmeingriff bringbar ist. In dieser Ausführung des Luftfilters besteht die vorteilhafte Möglichkeit, dass man den Filtereinsatz zunächst mit dem vom übrigen Filtergehäuse abgenommenen Gehäusedeckel verbindet. Dabei wird der Filtereinsatz zweckmäßig zunächst mit dem Ansaugstutzen verbunden und dann im Bereich der Lasche in Rast- oder Klemm-eingriff mit dem Rast- oder Klemmelement des Gehäusedeckels gebracht. In diesem Zustand wird der Filtereinsatz schon ausreichend zuverlässig am Gehäusedeckel gehalten, so dass eine vormontierte Baueinheit geschaffen ist, die als Einheit mit dem übrigen Filtergehäuse verbindbar ist, ohne dass dabei die Gefahr besteht, dass der Filtereinsatz sich ungewollt aus seiner gewünschten Lage relativ zum Gehäusedeckel herausbewegen kann.

Um den Konstruktions- und Teileaufwand niedrig zu halten, ist bevorzugt das Rast-oder Klemmelement am Gehäusedeckel durch den oben schon erwähnten Andruckarm gebildet.

In einer ersten diesbezüglichen Weiterbildung kann der Andruckarm in einen Schlitz passender Weite in der Lasche oder in deren Halteelement eingreifen. In dieser Ausführung werden sowohl die für die Rast- oder Klemmverbindung am Deckel als auch die am Filtereinsatz benötigen Teile besonders einfach gehalten, wobei gleichzeitig aber eine zuverlässige Funktion erzielt wird.

Eine alternative, zweite Weiterbildung sieht vor, dass der Andruckarm zwischen zwei in Richtung zum Deckel weisende Randstege der Lasche oder des Halteelements rastend oder klemmend eingreift. Auch in dieser Ausführung werden die für die Rast- oder Klemmverbindung am Deckel und am Filtereinsatz benötigen Teile bei zuverlässiger Funktion einfach gehalten.

Je nach den vorgegebenen Verhältnissen in einem Luftfilter kann die Lasche unterschiedlich ausgebildet sein. Eine erste Ausführung schlägt diesbezüglich vor, dass die Lasche im Wesentlichen in radialer Richtung von einem Außenumfang der zweiten Stirnscheibe nach außen verläuft. In dieser Ausführung ist die Lasche von besonders einfacher Ausgestaltung und zudem für das Bedienungspersonal bei der Montage des Filtereinsatzes immer gut sichtbar.

Alternativ kann die Lasche von einem Außenumfang der zweiten Stirnscheibe zunächst in im Wesentlichen axialer Richtung vom Filtereinsatz weg und dann in im Wesentlichen radialer Richtung nach innen verlaufen. In dieser Ausführung benötigt die Lasche radial außerhalb des Filtereinsatzes keinen Raum, was insbesondere die Verpackung des Filtereinsatzes während seines Vertriebes und seiner Vorhaltung bis zum Einsatz erleichtert. Dafür wird in axialer Richtung etwas mehr Länge beansprucht.

Statt mit einer der Stirnscheiben kann die Lasche auch mit einem anderen Teil des Filtereinsatzes verbunden oder einstückig ausgeführt sein.

Um bei einem Toleranzausgleich auftretende Bewegungen und Verformungen im Bereich er Lasche schadlos aufnehmen zu können, bestehen zweckmäßig die Lasche und der Gehäusedeckel aus elastisch-flexiblen Materialien, wobei das Material der Lasche zumindest bereichsweise eine höhere Elastizität als das Material des Gehäusedeckel aufweist. Hiermit wird gewährleistet, dass ein Toleranzausgleich, der zu Bewegungen und Verformungen führt, in erster Linie im Bereich der Lasche erfolgt, während der Gehäusedeckel durch den Toleranzausgleich nicht in seiner Form und Lage beeinflußt wird. Damit ist sichergestellt, dass stets ein dichter Abschluss des Filtergehäuses durch den Gehäusedeckel erfolgt. Wenn innerhalb der Lasche Bereiche unterschiedlicher Elastizität gewünscht werden, kann dies beispielsweise dadurch erreicht werden, dass für die Lasche zwei unterschiedlich elastische Materialien, die gut miteinander verbindbar sind, oder ein Material, das in seiner Elastizität bereichsweise gezielt einstellbar ist, verwendet werden/wird.

Hinsichtlich der Formgebung der Lasche bestehen unterschiedliche Möglichkeiten. Bevorzugt verläuft die Lasche in ihrer Längsrichtung gesehen flach oder gebogen oder gewellt. Bei flachem Verlauf hat die Lasche bei vorgegebenem Abstand des Halteelements von der zweiten Stirnscheibe eine minimale Länge, wobei diese aber in der Regel für einen Toleranzausgleich ausreicht, wenn die Toleranzen nicht zu groß sind und das Material der Lasche eine ausreichend hohe Elastizität hat. Bei einem gebogenen oder gewellten verlauf der Lasche wird die für den Toleranzausgleich zur Verfügung stehende Länge der Lasche bei gleichem Abstand des Halteelements von der Stirnscheibe vergrößert, was den Ausgleich größerer Toleranzen und/ oder eine Verminderung der Belastung der Lasche durch elastische Verformungen erlaubt.

Zwecks einfacher und kostengünstiger Massenfertigung ist vorgesehen, dass die Lasche oder die zweite Stirnscheibe einschließlich der Lasche sowie der Gehäusedeckel aus Kunststoff, vorzugsweise Polyamid oder Polypropylen, bestehen und spritztechnisch hergestellt sind.

Die Erfindung betrifft weiterhin einen Filtereinsatz für einen Luftfilter der vorstehend beschriebenen Art, wobei der Filtereinsatz aus zwei Stirnscheiben und einem zwischen diesen angeordneten, hohlzylindrischen Filterstoffkörper besteht, wobei der Filtereinsatz ein erstes, an einem luftführenden Anschlussstutzen des Luftfilters lösbar halterbares Stirnende aufweist, wobei an einem zweiten Stirnende mindestens eine Lasche vorgesehen ist, die an einem Filtergehäuse des Luftfilters lösbar festlegbar ist, und wobei die Lasche an ihrem gehäuseseitigen Ende ein Halteelement aufweist, das durch Schließen des Luftfilters werkzeuglos mit einem teils am Gehäusedeckel und teils am übrigen Filtergehäuse angeordneten Gegenhalteelement mittels Form- und/oder Kraftschluss in Halteeingriff und durch Öffnen des Luftfilters werkzeuglos außer Halteeingriff mit dem Gegenhalteelement bringbar ist.

Die Lösung des zweiten, den Filtereinsatz betreffenden Teils der Aufgabe gelingt erfindungsgemäß mit einem Filtereinsatz der vorgenennten Art, der dadurch gekennzeichnet ist, dass das Halteelement an der Lasche zwei voneinander beabstandete Halteköpfe aufweist.

Bevorzugte Ausgestaltungen und Weiterbildungen dieses Filtereinsatzes gehen aus den Patentansprüchen 17 bis 27 hervor.

Im Folgenden werden Ausführungsbeispiele der Erfindung anhand einer Zeichnung erläutert. Die Figuren der Zeichnung zeigen:
- Figur 1: einen Luftfilter mit Filtergehäuse und darin angeordnetem Filtereinsatz bei abgenommenem Gehäusedeckel, in perspektivischer Ansicht,
- Figur 2: ein Detail aus dem Filtergehäuse bei entferntem Filtereinsatz, in einer vergrößerten perspektivischen Ansicht,
- Figur 3: ein Detail des Filtereinsatzes aus Figur 1 in vergrößerter perspektivi- scher Ansicht,
- Figur 4: die Detailansicht gemäß Figur 2, nun mit eingebautem Filtereinsatz,
- Figur 5: einen Vertikalschnitt entlang einer ersten Schnittebene durch den Luftfil- ter gemäß Figur 1, nun mit Gehäusedeckel,
- Figur 6: einen Vertikalschnitt durch den Luftfilter gemäß Figur 1 entlang einer zweiten, parallel zu der ersten Schnittebene in Figur 5 verlaufenden, versetzten Schnittebene, auch hier mit aufgesetztem Gehäusedeckel,
- Figur 7: einen Deckel des Luftfilters mit einem daran vormontierten Filtereinsatz, in perspektivischer Ansicht,
- Figur 8: ein Detail aus Figur 7 in einer vergrößerten Ansicht,
- Figur 9: einen Ausschnitt aus einer Stirnscheibe des Filtereinsatzes mit einer Lasche, in einer ersten Ausführung in Seitenansicht,
- Figur 10: in gleicher Darstellung wie in Figur 9 eine geänderte Ausführung der Lasche,
- Figur 11: in gleicher Darstellung wie in Figur 9 und 10 eine dritte Ausführung der Lasche, und
- Figur 12: das Detail gemäß Figur 8 in einer geänderten Ausführung in Ansicht.

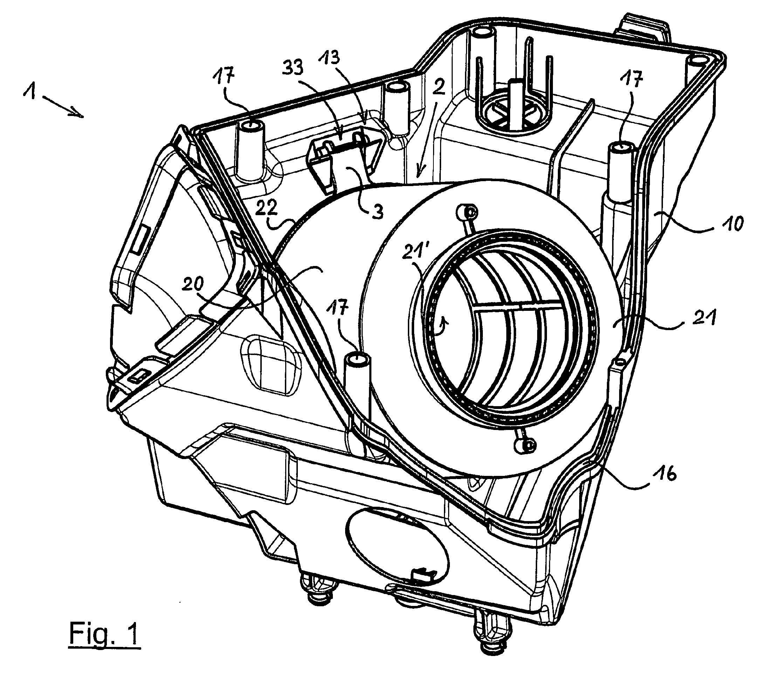

Figur 1 zeigt in einer perspektivischen Ansicht ein Filtergehäuse 10 eines Luftfilters 1 mit abgenommenem Gehäusedeckel. Im Inneren des Filtergehäuses 10 ist ein Filtereinsatz 2 angeordnet, hier ein Ringfilter, bestehend aus einem hohlzylindrischen Filterstoffkörper 20 und zwei diesen einfassenden Stirnscheiben 21 und 22. Die erste, dem Betrachter zugewandte Stirnscheibe 21 besitzt eine zentrale Durchbrechung 21', mit der der Filtereinsatz 2 mit einem luftführenden, hier nicht sichtbaren, im Gehäusedeckel vorgesehenen Anschlussstutzen verbindbar ist. Die dem Betrachter abgewandte, zweite Stirnscheibe 22 ist eine geschlossene Scheibe.

Einstückig mit der zweiten Stirnscheibe 22 ist eine in Radialrichtung nach außen vorragende Lasche 3 ausgebildet. Am freien, in Figur 1 nach oben weisenden Ende der Lasche 3 ist ein Halteelement 33 angeformt. Das Halteelement 33 ist in Eingriff mit einem Gegenhalteelement 13 auf der Seite des Filtergehäuses 10 bringbar.

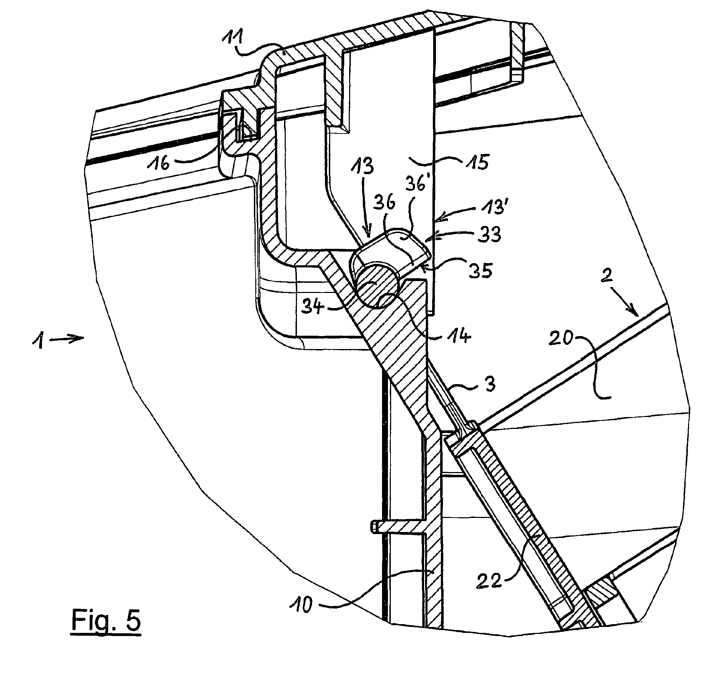

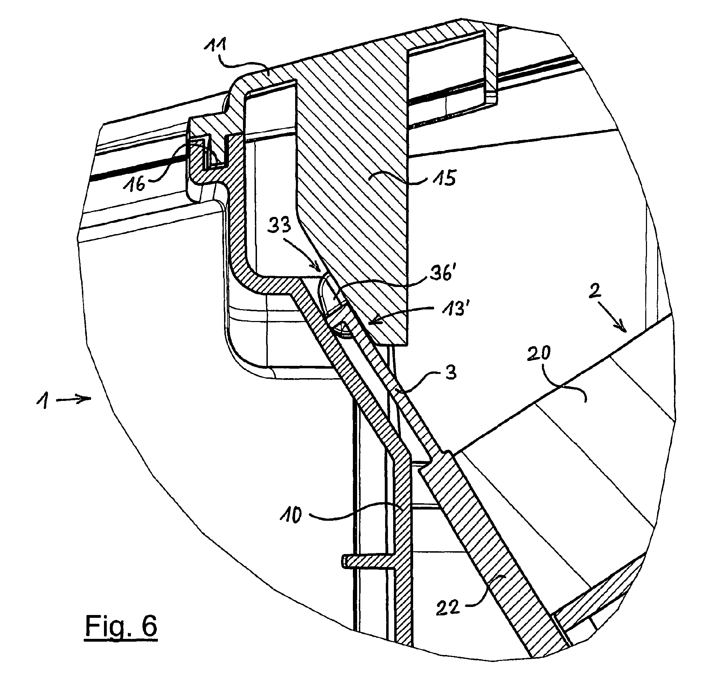

Im Eingriffszustand der Halteelemente 33 und 13 ist der Filtereinsatz 2 im Bereich seiner zweiten Stirnscheibe 22 relativ zum Filtergehäuse 10 festgelegt. Die abschließende Festlegung erfolgt durch Aufsetzen des in Figur 1 noch nicht angebrachten Gehäusedeckels, was anhand der Figuren 5 und 6 noch erläutert wird.

Wie an sich bekannt, ist entlang einer umlaufenden Dichtlinie an der Oberseite des Filtergehäuses 10 eine Dichtungsnut 16 angeformt, die zur Aufnahme einer Dichtung zwecks luftdichten Verschlusses des Luftfilters 1 nach Aufsetzen des hier noch nicht angebrachten Gehäusedeckels dient.

Innerhalb der von der Dichtungsnut 16 umgrenzten Fläche sind mehrere Gewindebohrungen 17 angeordnet, die zur Aufnahmen von Schrauben dienen, um den Gehäusedeckel mit dem übrigen Filtergehäuse 10 lösbar zu verbinden.

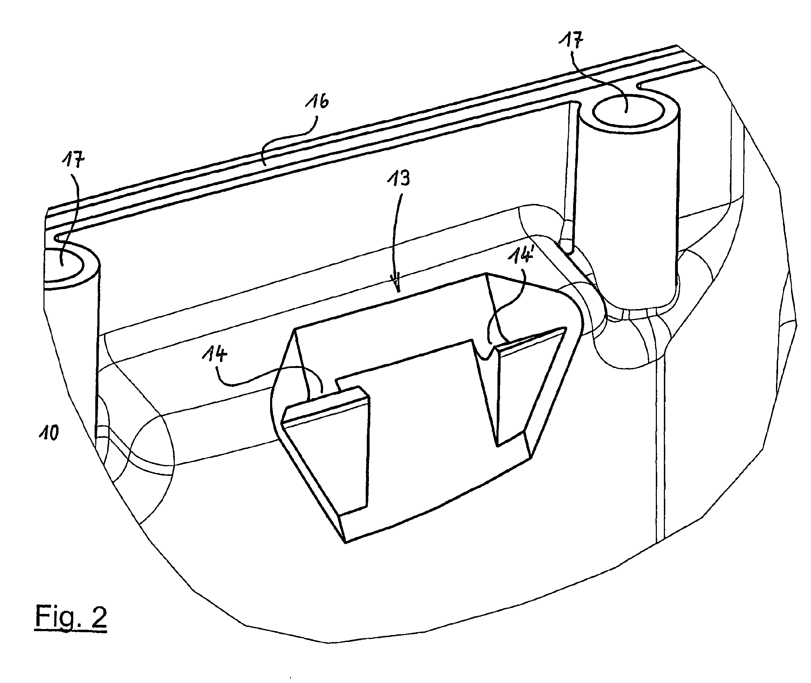

Figur 2 zeigt in Ansicht ein vergrößertes Detail aus dem Filtergehäuse 10 im Bereich von dessen Halteelement 13. Der Filtereinsatz 2 ist hier entfernt.

Das Halteelement 13 auf der Seite des Filtergehäuses 10 wird hier durch zwei muldenförmige Eintiefungen 14 und 14' gebildet, die mit Abstand voneinander angeordnet und einstückig mit dem übrigen Filtergehäuse 10 ausgebildet sind. Die Eintiefungen 14 und 14' fluchten miteinander.

Im Hintergrund der Figur 2 ist ein Abschnitt der Dichtungsnut 16 erkennbar; in deren Nachbarschaft sind zwei der Gewindebohrungen 17 sichtbar.

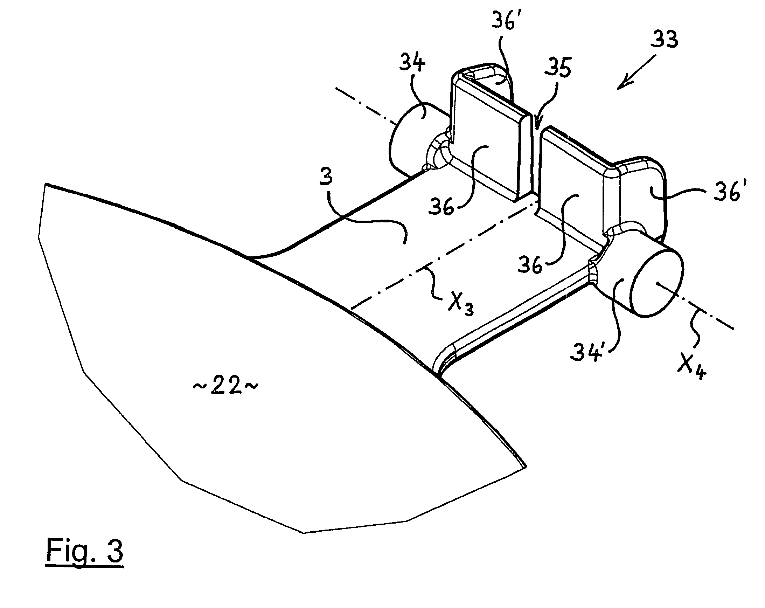

Figur 3 zeigt als Einzelheit einen Ausschnitt der zweiten Stirnscheibe 22 im Bereich der daran vorgesehenen Lasche 3. Die Lasche 3 ist einstückig mit der zweiten Stirnscheibe 22 ausgeführt und ragt in Radialrichtung nach außen vom Außenumfang der zweiten Stirnscheibe 22 ab. Mit der strichpunktierten Linie X₃ ist die in Radialrichtung der zweiten Stirnscheibe 22 verlaufende Längsrichtung der Lasche 3 bezeichnet.

Am von der zweiten Stirnscheibe 22 entfernten Ende der Lasche 3 ist das Halteelement 33 angeformt. Dieses umfasst zunächst zwei Halteköpfe 34 und 34', die links und rechts in Flucht miteinander an der Lasche 3 vorgesehen sind. Durch die strichpunktierte Linie X₄ ist die gemeinsame Längsmittelachse der zylinderförmigen Halteköpfe 34 und 34' bezeichnet.

Das freie Ende der Lasche 3 zwischen den Halteköpfen 34 und 34' ist zu einem nach oben abgewinkeltem Ende 36 geformt, um einerseits eine erhöhte Stabilität zu erreichen und um andererseits einen Schlitz 35 im Bereich des abgewinkelten Endes 36 ausbilden zu können. Die Funktion des Schlitzes 35 wird weiter unten noch erläutert. Seitlich ist an den Kanten des abgewinkelten Endes 36 je ein nach radial außen abgewinkelter Randsteg 36' angeformt, der hier zur Aussteifung dient.

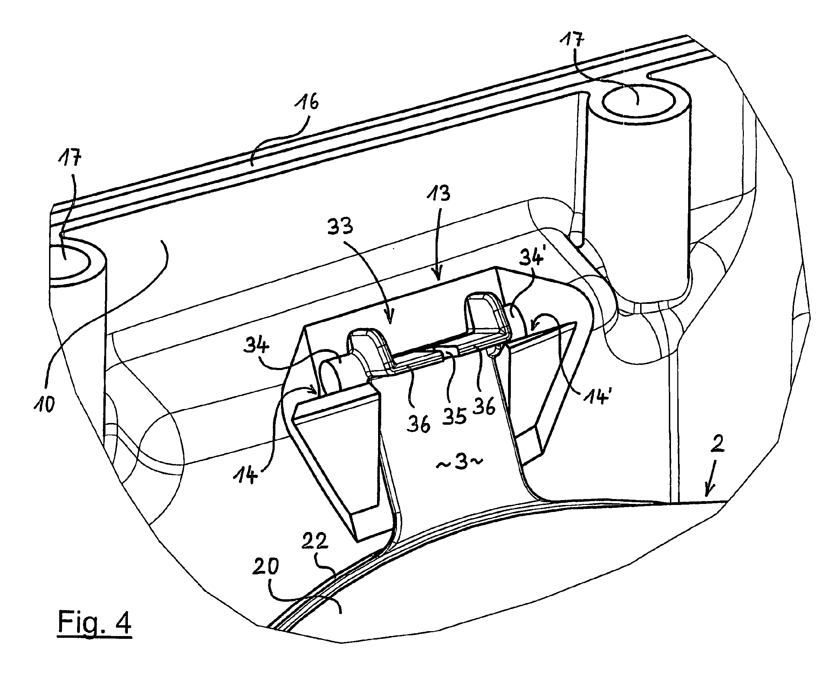

Figur 4 zeigt in gleicher Darstellung wie Figur 2 das Detail aus dem Filtergehäuse 10, im Unterschied zu Figur 2 aber nun mit eingesetztem Filtereinsatz 2. Von dem Filtereinsatz 2 ist nur dessen unterster Bereich mit einem kleinen Teil des Filterstoffkörpers 20 und einem Teil der zweiten, unteren Stirnscheibe 22 sichtbar. Vom Außenumfang der zweiten Stirnscheibe 22 ragt in Radialrichtung die Lasche 3 mit dem Halteelement 33 nach außen. Die das Halteelement 33 bildenden zwei Halteköpfe 34 und 34' liegen in den beiden trogförmigen Eintiefungen 14 und 14', die das Gegenhalteelement 13 für das Halteelement 33 bilden.

In dieser Lage ist der Filtereinsatz 2 über seine zweite Stirnscheibe 22 und die Lasche 3 in Radialrichtung festgelegt.

Zwischen den beiden Halteköpfen 34 und 34' ist das abgewinkelte Ende 36 der Lasche mit dem Schlitz 35 sichtbar.

Im Hintergrund der Figur 4 liegt ein Abschnitt der Dichtungsnut 16, neben der im Filtergehäuse 10 zwei der Gewindebohrungen 17 liegen.

Figur 5 zeigt einen ersten Vertikalschnitt durch den Luftfilter 1 im Bereich der Halteelemente 13, 33, wobei hier die Schnittebene durch den näher zum Betrachter liegenden Haltekopf 34 verläuft.

Annähernd vertikal verläuft eine geschnittene Wandung des Filtergehäuses 10 in Figur 5. Nach oben hin ist dieses durch die Dichtungsnut 16 begrenzt. Ein Gehäusedeckel 11 ist von oben her auf das Filtergehäuse 10 aufgesetzt und greift dichtend in die Dichtungsnut 16 ein.

Rechts unten in Figur 5 ist ein Teil des Filtereinsatzes 2 sichtbar. Der Filterstoffkörper 20 wird an seiner Unterseite von der zweiten Stirnscheibe 22 dichtend eingefasst. In Radialrichtung von der zweiten Stirnscheibe 22 nach außen geht einstückig mit dieser die Lasche 3 ab, die hier zum Teil durch das Filtergehäuse 10 verdeckt ist. Der dem Betrachter zugewandte Haltekopf 34, der einen Teil des Halteelements 33 der Lasche 3 bildet, liegt in der Eintiefung 14, die im Inneren des Filtergehäuses 10 ausgeformt ist.

Kurz hinter der Schnittebene liegen das abgewinkelte Ende 36 und einer der Randstege 36' der Lasche 3 mit dem darin verlaufenden, hier verdeckten Schlitz 35. In den Schlitz 35 greift nun ein Andruckarm 15 ein, der Teil des Gehäusedeckels 11 ist und dessen unterer Bereich einen deckelseitigen Teil 13' des Gegenhalteelements 13, 13' für das Halteelement 33 bildet. In diesem geschlossenen Zustand des Luftfilters 1 mit auf das Filtergehäuse 10 aufgesetztem Gehäusedeckel 11 drückt der Andruckarm 15 im Bereich des Schlitzes 35, also in Richtung der Längsmittelachse der Halteköpfe 34 und 34' gesehen etwa mittig zwischen diesen, auf das Halteelement 33 und übt dabei eine Kraft aus, die von oben her in Richtung zum tiefsten Bereich der Eintiefungen 14, 14' gerichtet ist. Auf diese Weise werden die Halteköpfe 34 und 34' auch in Vertikalrichtung in den Eintiefungen 14, 14' festgelegt, so dass ein spielfreier Eingriff, der aber noch eine ausreichende Schwenkbewegung der Lasche 3 erlaubt, gewährleistet ist.

Toleranzen des Filtereinsatzes 2 können auf diese Weise problemlos aufgenommen werden, indem eine gewisse Verformung der Lasche 3 und eine gewisse Verschwenkung der Lasche 3 um die Längsmittelachse X₄ der Halteköpfe 34, 34' erfolgt. Zugleich ist die zweite Stirnscheibe 22 gegen unerwünschte Bewegungen, die zu Schäden am Filterstoffkörper 20 führen könnten, gesichert. Der Eingriff der Elemente 13, 13' und 33 erfolgt ohne weitere Maßnahmen allein durch das Einsetzen des Halteelements 33 in das Gegenhalteelement 13 am Filtergehäuse 10 und das abschließende Aufsetzen des Gehäusedeckels 11 mit dem deckelseitigem Teil 13' des Gegenhalteelements.

Figur 6 zeigt den Luftfilter aus Figur 5 in einem zweiten, parallel zur Schnittebene der Figur 5 verlaufenden Vertikalschnitt, wobei hier die Schnittebene durch den Andruckarm 15 verläuft. Der Andruckarm 15, der einen Teil des Gehäusedeckels 11 bildet, ist in Figur 6 nun also geschnitten dargestellt.

Links und unterhalb des Andruckarms 15 ist das Filtergehäuse 10 im Schnitt sichtbar. Im rechten unteren Teil der Figur 6 liegt der Filtereinsatz 2, von dem hier ebenfalls nur ein kleiner Ausschnitt sichtbar ist. Nach unten hin wird der Filterstoffkörper 20 durch die zweite Stirnscheibe 22 eingefasst, von der einstückig die Lasche 3 in Radialrichtung nach außen abgeht. Am freien Ende der Lasche 3 ist deren Halteelement 33 angeformt, wobei hier die Halteköpfe nicht sichtbar sind, sondern nur ein Teil des hinteren Randsteges 36' der Lasche 3 zu sehen ist. Deutlich wird hier insbesondere, dass der Andruckarm 15 die Lasche 3 in ihrer Lage sichert und festlegt. Eine Bewegung der zweiten Stirnscheibe 22 in Radialrichtung ist damit unterbunden. Gleichzeitig erlaubt die Lasche 3 aber einen Ausgleich von axialen Längentoleranzen des Filtereinsatzes 2.

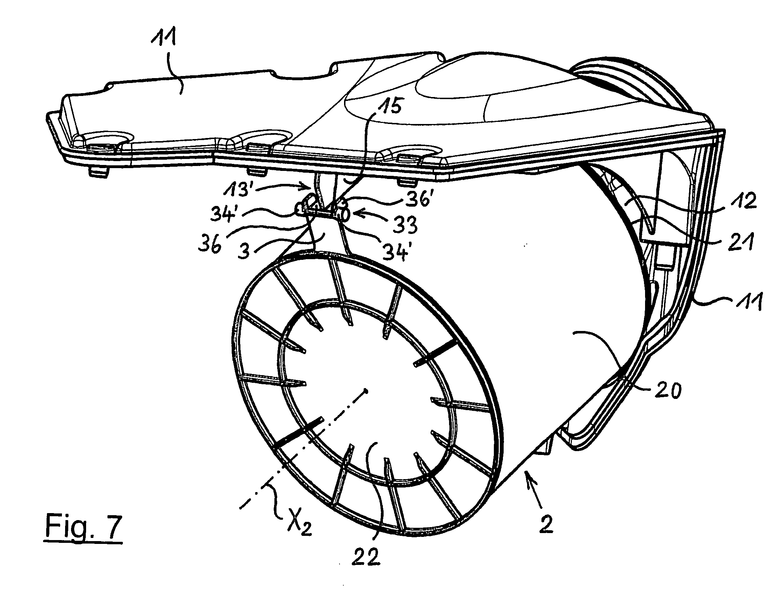

Figur 7 veranschaulicht in einer perspektivischen Darstellung eine Vormontage von Gehäusedeckel 11 und Filtereinsatz 2, die mit den zuvor beschriebenen Halteelementen 13, 13', 33 möglich ist.

Oben und rechts in Figur 7 ist der hier abgewinkelte Gehäusedeckel 11 sichtbar, mit dem ein luftführender Anschlussstutzen 12, der hier weitestgehend verdeckt ist, verbunden oder einstückig ausgebildet ist. Auf diesen Anschlussstutzen 12 ist der Filtereinsatz 2 mittels seiner ersten Stirnscheibe 21 und der dort vorgesehenen zentralen Durchbrechung, die hier nicht sichtbar ist, dichtend aufgesteckt oder aufgeschraubt, wie dies an sich bekannt ist.

Dem Betrachter zugewandt ist in Figur 7 die zweite Stirnscheibe 22, die geschlossen ist und durch deren Mittelpunkt die Längsmittelachse X₂ des Filtereinsatzes 2 verläuft. Der Filtereinsatz 2 besteht hier wieder neben den beiden Stirnscheiben 21 und 22 aus einem hohlzylindrischen Filterstoffkörper 20.

Von der zweiten Stirnscheibe 22 geht die einstückig damit ausgebildete Lasche 3 in Radialrichtung nach außen, hier nach oben, ab. An der Lasche 3 sind als deren Halteelement 33 die beiden Halteköpfe 34 und 34' sichtbar. Zwischen diesen liegt das abgewinkelte Ende 36 der Lasche 3 mit dem darin ausgesparten Schlitz 35 und den beiden Randstegen 36'.

In dem in Figur 7 gezeigten vormontierten Zustand greifen der Schlitz 35 und der einstückig mit dem Gehäusedeckel 11 ausgebildete Andruckarm 15 klemmend oder rastend ineinander, wobei diese Klemm- oder Rastverbindung lösbar ist. Die Festigkeit der Klemm- oder Rastverbindung ist hier so gewählt, dass der Filtereinsatz 2 in dem gezeigten vormontierten Zustand sicher am Deckel 11 gehalten ist und sich nicht selbsttätig von dem Gehäusedeckel 11 löst. Gleichzeitig bleibt aber zum Zweck eines Filtereinsatzwechsels diese Klemm- oder Rastverbindung manuell lösbar, so dass nach dem Lösen dieser Klemm- oder Rastverbindung der Filtereinsatz 2 von seinem Ansaugstutzen 12 entfernt und in umgekehrter Reihenfolge der Montageschritte durch einen neuen Filtereinsatz 2 ersetzt werden kann.

Die vormontierte Einheit gemäß Figur 7 aus Gehäusedeckel 11 und Filtereinsatz 2 kann dann mit dem übrigen Filtergehäuse 10 verbunden werden, ohne dass dabei auf die Einhaltung einer exakten Lage des Filtereinsatzes 2 noch gesondert geachtet werden müsste, weil diese Lagersicherung durch die Vormontage schon gewährleistet ist.

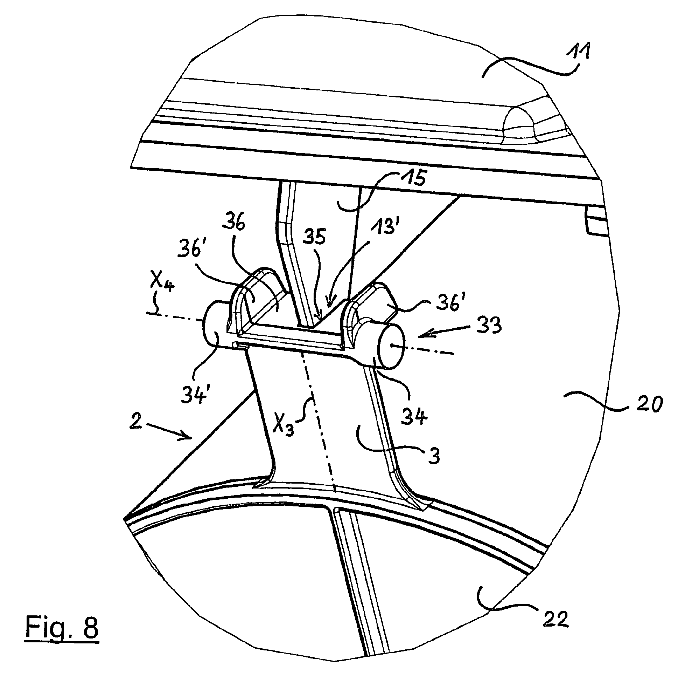

Figur 8 zeigt in einer vergrößerten Detailansicht das Zusammenwirken von Filtereinsatz 2 und Deckel 11 im Bereich der Lasche 3 und des Andruckarms 15.

Oben ist in Figur 8 ein Teil des Gehäusedeckels 11 sichtbar, von dessen Unterseite oder Innenseite der Andruckarm 15 etwa rechtwinklig abgeht. Der Andruckarm 15 bildet den deckelseitigen Teil 13' des Gegenhalteelements 13, 13' für das Halteelement 33 an der Lasche 3. Gleichzeitig dient der Andruckarm 15 der anhand von Figur 7 erläuterten Vormontage von Gehäusedeckel 11 und Filtereinsatz 2.

Unten in Figur 8 ist ein Ausschnitt der zweiten Stirnscheibe 22 sichtbar, von der nach oben, das heißt gemäß Figur 8 im Wesentlichen nach hinten, der Filterstoffkörper 20 des Filtereinsatzes 2 aufragt.

Vom Außenumfang der zweiten Stirnscheibe 22 ragt die Lasche 3 vor und trägt an ihrem freien Ende die beiden Halteköpfe 34, 34' mit ihrer gemeinsamen Längsmittelachse X₄. Zwischen den Halteköpfen 34 und 34' liegt das abgewinkelte Ende 36 der Lasche 3 mit dem dort angeordneten Schlitz 35 für den Andruckarm 15 und den beiden Randstegen 36'. Mit der strichpunktierten Linie X₃ ist die Längsrichtung der Lasche 3 gekennzeichneten.

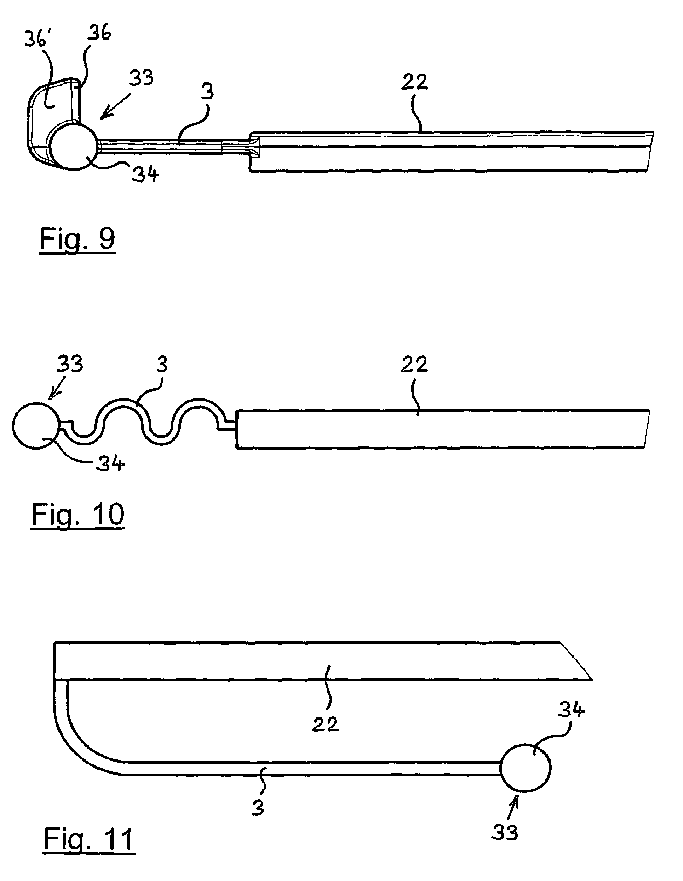

Figur 9 zeigt einen Ausschnitt der zweiten Stirnscheibe 22 mit der Lasche 3 gemäß den zuvor beschriebenen Ausführungen. Aufgrund der in Figur 9 dargestellten Seitenansicht ist nur der eine, dem Betrachter zugewandte Haltekopf 34 des Halteelements 33 am freien Ende der Lasche 3 erkennbar. Zwischen dem sichtbaren Haltekopf 34 und dem im Hintergrund liegenden zweiten, hier nicht sichtbaren Haltekopf liegt das abgewinkelte Ende 36 der Lasche 3. Außerdem ist der vordere Randsteg 36' sichtbar. Aus dieser Seitenansicht gemäß Figur 9 ist deutlich ersichtlich, dass die Lasche 3 hier einen geraden, flachen Verlauf hat.

Eine diesbezügliche Abwandlung der Lasche 3 zeigt die Figur 10. Hier ist die Lasche 3 in ihrer Längsrichtung, d.h. gemäß Figur 10 von rechts nach links gesehen, gewellt ausgeführt. Hierdurch wird, bei annähernd gleichbleibendem Abstand des Halteelements 33 von der Stirnscheibe 22, die Länge der Lasche 3 vergrößert, was ihre elastische Verformung erleichtert.

Eine dritten Ausführung hinsichtlich der Form der Lasche 3 zeigt die Figur 11. Hier verläuft die Lasche vom Außenumfang der zweiten Stirnscheibe 22 ausgehend zunächst in Axialrichtung von der zweiten Stirnscheibe 22 weg nach außen und biegt dann in einem Bogen in Radialrichtung nach innen hin um. Am freien Ende der Lasche 3 ist auch hier das Halteelement 33 angeformt, von dem hier wieder nur der dem Betrachte zugewandte Haltekopf 34 sichtbar ist.

Auch mit dieser Ausführung der Lasche kann die zweite Stirnscheibe 22 in ihrer Radialrichtung gegen störende Bewegungen festgelegt werden, während ein Toleranzausgleich in axialer Richtung des Filtereinsatzes 2 möglich bleibt.

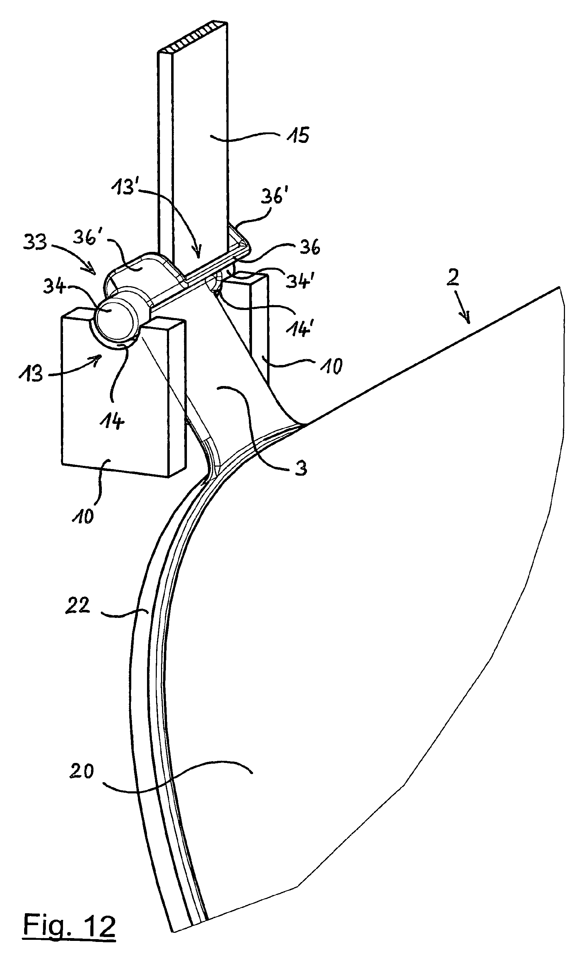

Figur 12 schließlich zeigt in einer perspektivischen Ansicht das in Figur 8 dargestellte Detail in einer geänderten Ausführung.

Rechts unten in Figur 12 ist ein Teil des Filtereinsatzes 2 mit seinem Filterstoffkörper 20 und seiner zweiten, unteren Stirnscheibe 22 erkennbar. Vom Außenumfang der Stirnscheibe 22 ragt in Radialrichtung nach außen die Lasche 3 ab. Am äußeren Ende der Lasche 3 ist deren Halteelement 33 angeordnet. Das Halteelement 33 besteht auch hier aus einem Paar von miteinander fluchtenden, nach links und rechts weisenden zylindrischen Halteköpfen 34 und 34'. Außerdem besitzt auch hier das äußere Ende der Lasche 3 einen nach oben abgewinkelten Endbereich 36, an dem beiderseits je ein nach radial außen abgewinkelter Randsteg 36' angeformt ist. Die beiden Randstege 36' verlaufen parallel oder annähernd parallel zueinander und weisen in Richtung nach oben zu dem hier nicht dargestellten Gehäusedeckel.

Der Andruckarm 15 ist ein Teil des Gehäusedeckels und ragt von dessen Unterseite nach unten hin in Richtung zu der Lasche 3 hin vor. Das freie, untere Ende des Andruckarms 15 bildet den deckelseitigen Teil 13' des Gegenhalteelements 13, 13'. Den gehäuseseitigen Teil 13 des Gegenhalteelements 13, 13' bilden hier zwei etwa halbkreisförmige, muldenartige Eintiefungen 14 und 14', deren Durchmesser zum Außendurchmesser der zylindrischen Halteköpfe 34 und 34' passt.

Das untere Ende des Andrucksarms 15 greift hier zum einen klemmend zwischen die beiden parallel zueinander verlaufenden Randstege 36' ein, wodurch eine Vormontage des Filtereinsatzes 2 am Gehäusedeckel ermöglicht wird. Die Klemmkraft zwischen dem unteren Ende des Andruckarms 15 und den beiden Randstegen 36' ist dabei so bemessen, dass der Filtereinsatz 2 über die Lasche 3 ausreichend sicher an dem Andruckarm 15 fixiert ist, um die vormontierte Einheit aus Gehäusedeckel und Filtereinsatz 2 in das Filtergehäuse 10 einbauen zu können, ohne dass sich der Filtereinsatz 2 von dem Andruckarm 15 und damit von dem Gehäusedeckel trennt.

Außerdem dient im zusammengebauten Zustand des Luftfilters der Andruckarm 15 dazu, mit seinem unteren Ende das Halteelement 33 der Lasche 3 im gehäuseseitigen Teil 13 des Gegenhalteelements 13, 13' zu fixieren, indem die zylindrischen Halteköpfe 34 und 34' in die Eintiefungen 14 und 14' gedrückt werden. Hierzu besitzt das freie Ende des Andruckarms 15, das in Figur 12 verdeckt ist, zweckmäßig eine Endschräge, die in ihrer Neigung der Lage der radial nach außen weisenden Oberfläche des abgewinkelten Endes 36 der Lasche 3 angepasst ist.

Im zusammengebauten Zustand des Luftfilters ist damit das Halteelement 33 der Lasche 3 durch das deckel- und gehäuseseitig vorgesehene Gegenhalteelement 13, 13' in seiner Lage so festgelegt, dass eine schädliche radiale Bewegung der unteren Stirnscheibe 22 und des Filtereinsatzes 2 unterbunden ist, gleichzeitig aber eine gewisse Verschwenkung der Halteköpfe 34 und 34' in den Eintiefungen 14 und 14' möglich bleibt, um axiale Längentoleranzen des Filtereinsatzes 2 ausgleichen zu können.

Toleranzen zwischen dem Gehäusedeckel und seinem Andruckarm 15 einerseits und der Lasche 3 und dem hier nur zu einem ganz kleinen Teil dargestellten Filtergehäuse 10 andererseits werden durch eine entsprechende Elastizität der Lasche 3 und bei Bedarf auch des Andruckarms 15 aufgenommen, die somit elastisch-flexibel verformbar sind. Dabei hat bevorzugt die Lasche 3 insgesamt oder in bestimmten Bereichen eine höhere Elastizität als der Gehäusedeckel und sein Andruckarm 15, um in erster Linie die Toleranzen in der Lasche 3 auszugleichen und den Gehäusedeckel möglichst von Verformungen, die seine Dichtigkeit beeinträchtigen könnten, zu bewahren.

Damit sind auch bei dieser Ausführung eine spielfreie und somit auch geräusch- und verschleißfreie Festlegung der Lasche 3 zwischen Filtergehäuse 10 und Gehäusedeckel bei ausreichender Verschwenkbarkeit der Lasche 3 um die zylindrischen Halteköpfe 34 und 34' und die Möglichkeit einer Vormontage von Gehäusedeckel und Filtereinsatz 2 gewährleistet.

## Patentansprüche

1. Luftfilter (1), insbesondere für die Ansaugluft einer Brennkraftmaschine, mit einem Filtergehäuse (10) mit einem abnehmbaren Gehäusedeckel (11) und mit einem im Filtergehäuse (10) angeordneten, austauschbaren Filtereinsatz (2), der aus zwei Stirnscheiben (21, 22) und einem zwischen diesen angeordneten, hohlzylindrischen Filterstoffkörper (20) besteht, wobei der Filtereinsatz (2) an einem ersten Stirnende an einem luftführenden Anschlussstutzen (12) lösbar gehaltert ist, wobei an einem zweiten Stirnende mindestens eine Lasche (3) vorgesehen ist, die am Filtergehäuse (10) lösbar festgelegt ist, wobei die Lasche (3) an ihrem gehäuseseitigen Ende ein Halteelement (33) aufweist, das durch Schließen des Luftfilters (1) werkzeuglos mit einem Gegenhalteelement (13, 13') am Filtergehäuse (10) mittels Form- und/oder Kraftschluss in Halteeingriff und durch Öffnen des Luftfilters (1) werkzeuglos außer Halteeingriff mit dem Gegenhalteelement (13, 13') gelangt, wobei das Gegenhalteelement (13, 13') teils am Gehäusedeckel (11) und teils am übrigen Filtergehäuse (10) angeordnet ist; und wobei das Halteelement (33) im geschlossenen Zustand des Luftfilters (1) zwischen dem Gehäusedeckel (11) und dem übrigen Filtergehäuse (10) durch Form- und/oder Kraftschluss fixiert ist,
**dadurch gekennzeichnet,**
**dass** das Halteelement (33) an der Lasche (3) zwei voneinander beabstandete Halteköpfe (34, 34') aufweist, ein gehäuseseitiger Teil (13) des Gegenhalteelements (13, 13') zwei mulden- oder keilnutförmige Eintiefungen (14, 14') zur Aufnahme der Halteköpfe (34, 34') aufweist und ein deckelseitiger Teil (13') des Gegenhalteelements (13, 13') einen Andruckarm (15) umfasst, der bei geschlossenem Gehäusedeckel (11) die Halteköpfe (34, 34') in die Eintiefungen (14, 14') drückt.

2. Luftfilter nach Anspruch 1, **dadurch gekennzeichnet, dass** die Halteköpfe (34, 34') jeweils die Form eines Zylinders haben, wobei die beiden zylinderförmigen Halteköpfe (34, 34') eine gemeinsame Längsmittelachse (X₄) aufweisen.

3. Luftfilter nach Anspruch 2, **dadurch gekennzeichnet, dass** die gemeinsame Längsmittelachse (X₄) der beiden Halteköpfe (34, 34') senkrecht zu einer Längsrichtung (X₃) der Lasche (3) und senkrecht zu einer Längsmittelachse (X₂) des Filtereinsatzes (2) verläuft.

4. Luftfilter nach einem der Ansprüche 1 bis 3, **dadurch gekennzeichnet, dass** die Lasche (3) einstückig mit dem Filtereinsatz (2), vorzugsweise mit einer Stirnscheibe (22) am zweiten Stirnende des Filtereinsatzes (2), ausgebildet ist.

5. Luftfilter nach einem der Ansprüche 1 bis 3, **dadurch gekennzeichnet, dass** die Lasche (3) als separates Einzelteil hergestellt und mit dem Filtereinsatz (2) verbunden ist.

6. Luftfilter nach einem der vorhergehenden Ansprüche, **dadurch gekennzeichnet, dass** der Halteeingriff zwischen Halteelement (33) und Gegenhalteelement (13, 13') als spielfreier Eingriff ausgeführt ist, wobei der Andruckarm (15) in einem zwischen den Halteköpfen (34, 34') liegenden Bereich, vorzugsweise mittig zwischen den beiden Halteköpfen (34, 34'), auf das Halteelement (33) drückt.

7. Luftfilter nach einem der vorhergehenden Ansprüche, **dadurch gekennzeichnet, dass** der Anschlussstutzen (12) im Gehäusedeckel (11) vorgesehen ist und dass ein am Gehäusedeckel (11) angeordneter Teil (13') des Gegenhalteelements (13, 13') ein Rast- oder Klemmelement umfasst, das mit der Lasche (3) oder deren Halteelement (33) in lösbaren Rast- oder Klemmeingriff bringbar ist.

8. Luftfilter nach Anspruch 7, **dadurch gekennzeichnet, dass** das Rast- oder Klemmelement am Gehäusedeckel (11) durch den Andruckarm (15) gebildet ist.

9. Luftfilter nach Anspruch 8, **dadurch gekennzeichnet, dass** der Andruckarm (15) in einen Schlitz (35) passender Weite in der Lasche (3) oder in deren Halteelement (33) rastend oder klemmend eingreift.

10. Luftfilter nach Anspruch 8, **dadurch gekennzeichnet, dass** der Andruckarm (15) zwischen zwei in Richtung zum Deckel (11) weisende Randstege (36') der Lasche (3) oder des Halteelements (33) rastend oder klemmend eingreift.

11. Luftfilter nach einem der Ansprüche 1 bis 10, **dadurch gekennzeichnet, dass** die Lasche (3) im Wesentlichen in radialer Richtung von einem Außenumfang der zweiten Stirnscheibe (22) nach außen verläuft.

12. Luftfilter nach einem der Ansprüche 1 bis 10, **dadurch gekennzeichnet, dass** die Lasche (3) von einem Außenumfang der zweiten Stirnscheibe (22) zunächst in im Wesentlichen axialer Richtung vom Filtereinsatz (2) weg und dann in im Wesentlichen radialer Richtung nach innen verläuft.

13. Luftfilter nach einem der vorhergehenden Ansprüche, **dadurch gekennzeichnet, dass** die Lasche (3) und der Gehäusedeckel (11) aus elastisch-flexiblen Materialien bestehen, wobei das Material der Lasche (3) zumindest bereichsweise eine höhere Elastizität als das Material des Gehäusedeckels (11) aufweist.

14. Luftfilter nach einem der vorhergehenden Ansprüche, **dadurch gekennzeichnet, dass** die Lasche (3) in ihrer Längsrichtung (X₃) gesehen flach oder gebogen oder gewellt verläuft.

15. Luftfilter nach einem der vorhergehenden Ansprüche, **dadurch gekennzeichnet, dass** die Lasche (3) oder die zweite Stirnscheibe (22) einschließlich der Lasche (3) sowie der Gehäusedeckel (11) aus Kunststoff, vorzugsweise Polyamid oder Polypropylen, bestehen und spritztechnisch hergestellt sind.

16. Filtereinsatz (2) für einen Luftfilter (1) nach einem der Ansprüche 1 bis 15, wobei der Filtereinsatz (2) aus zwei Stirnscheiben (21, 22) und einem zwischen diesen angeordneten, hohlzylindrischen Filterstoffkörper (20) besteht, wobei der Filtereinsatz (2) ein erstes, an einem luftführenden Anschlussstutzen (12) des Luftfilters (1) lösbar halterbares Stirnende aufweist und wobei an einem zweiten Stirnende mindestens eine Lasche (3) vorgesehen ist, die an einem Filtergehäuse (10) des Luftfilters (1) lösbar festlegbar ist, wobei die Lasche (3) an ihrem gehäuseseitigen Ende ein Halteelement (33) aufweist, das durch Schließen des Luftfilters (1) werkzeuglos mit einem teils am Gehäusedeckel (11) und teils am übrigen Filtergehäuse (10) angeordneten Gegenhalteelement (13, 13') mittels Form- und/oder Kraftschluss in Halteeingriff und durch Öffnen des Luftfilters (1) werkzeuglos außer Halteeingriff mit dem Gegenhalteelement (13, 13') bringbar ist,
**dadurch gekennzeichnet,**
**dass** das Halteelement (33) an der Lasche (3) zwei voneinander beabstandete Halteköpfe (34, 34') aufweist.

17. Filtereinsatz nach Anspruch 16, **dadurch gekennzeichnet, dass** die Halteköpfe (34, 34') jeweils die Form eines Zylinders haben, wobei die beiden zylinderförmigen Halteköpfe (34, 34') eine gemeinsame Längsmittelachse (X₄) aufweisen.

18. Filtereinsatz nach Anspruch 17, **dadurch gekennzeichnet, dass** die gemeinsame Längsmittelachse (X₄) senkrecht zu einer Längsrichtung (X₃) der Lasche (3) und senkrecht zu einer Längsmittelachse (X₂) des Filtereinsatzes (2) verläuft.

19. Filtereinsatz nach nach einem der Ansprüche 16 bis 18, **dadurch gekennzeichnet, dass** die Lasche (3) einstückig mit dem Filtereinsatz (2), vorzugsweise mit einer Stirnscheibe (22) am zweiten Stirnende des Filtereinsatzes (2), ausgebildet ist.

20. Filtereinsatz nach einem der Ansprüche 16 bis 18, **dadurch gekennzeichnet, dass** die Lasche (3) als separates Einzelteil hergestellt und mit dem Filtereinsatz (2) verbunden ist.

21. Filtereinsatz nach einem der Ansprüche 16 bis 20, **dadurch gekennzeichnet, dass** die Lasche (3) oder deren Halteelement (33) Mittel umfasst, mit denen ein am Gehäusedeckel (11) angeordnetes Rast- oder Klemmelement in lösbaren Rast- oder Klemmeingriff bringbar ist.

22. Filtereinsatz nach Anspruch 21, **dadurch gekennzeichnet, dass** in der Lasche (3) oder in deren Halteelement (33) ein Schlitz (35) einer solchen Weite vorgesehen ist, dass in diesen ein als das Rast- oder Klemmelement am Gehäusedeckel (11) vorgesehener, einen deckelseitigen Teil (13') des Gegenhaltelements (13, 13') bildender Andruckarm (15) rastend oder klemmend lösbar eingreifen kann.

23. Filtereinsatz nach einem der Ansprüche 16 bis 22, **dadurch gekennzeichnet, dass** die Lasche (3) im Wesentlichen in radialer Richtung von einem Außenumfang der zweiten Stirnscheibe (22) nach außen verläuft.

24. Filtereinsatz nach einem der Ansprüche 16 bis 22, **dadurch gekennzeichnet, dass** die Lasche (3) zunächst in im Wesentlichen axialer Richtung von einem Außenumfang der zweiten Stirnscheibe (22) vom Filtereinsatz (2) weg und dann in im Wesentlichen radialer Richtung nach innen verläuft.

25. Filtereinsatz nach einem der Ansprüche 16 bis 24, **dadurch gekennzeichnet, dass** die Lasche (3) aus einem elastisch-flexiblen Material besteht.

26. Filtereinsatz nach einem der Ansprüche 16 bis 25, **dadurch gekennzeichnet, dass** die Lasche (3) in ihrer Längsrichtung (X₃) gesehen flach oder gebogen oder gewellt verläuft.

27. Filtereinsatz nach einem der Ansprüche 16 bis 26, **dadurch gekennzeichnet, dass** die Lasche (3) oder die zweite Stirnscheibe (22) einschließlich der Lasche (3) aus Kunststoff, vorzugsweise Polyamid oder Polypropylen, besteht und spritztechnisch hergestellt ist.

## Claims

1. Air filter (1), particularly for the intake air of an internal combustion engine, with a filter housing (10) with a detachable housing cover (11) and with a replaceable filter insert (2) arranged in the filter housing (10), said insert consisting of two face disks (21, 22) and a hollow cylindrical filter cloth body (20) arranged between them, wherein the filter insert (2) on a first face end is detachably mounted on an air-conducting connecting tube (12), wherein, on a second face end, at least one butt strap (3) is provided which is detachably set on the filter housing (10), the butt strap (3) comprising on its housing-side end a holding element (33) which, by closing the air filter (1), gets into holding engagement without tools with a counter-holding element (13, 13') on the filter housing (10) by means of positive locking and/or frictional connection and which, by opening the air filter (1), gets out of holding engagement without tools with the counter-holding element (13, 13'), the counter-holding element (13, 13') being arranged partly on the housing cover (11) and partly on the remaining filter housing (10), and wherein the holding element (33) is fixed by positive locking and/or frictional connection in the closed condition of the air filter (1) between the housing cover (11) and the remaining filter housing (10),
**characterized in that**
the holding element (33) on the butt strap (3) comprises two holding heads (34, 34') spaced apart from each other, a housing-side part (13) of the counter-holding element (13, 13') comprises two trough-shaped or key groove-shaped cavities (14, 14') for accepting the holding heads (34, 34'), and a cover-side part (13') of the counter-holding element (13, 13') includes a pressing arm (15) which pushes the holding heads (34, 34') into the cavities (14, 14') with closed housing cover (11).

2. Air filter according to claim 1, **characterized in that** the holding heads (34, 34') each have the form of a cylinder, the two cylinder-shaped holding heads (34, 34') having a joint longitudinal center axis (X₄).

3. Air filter according to claim 2, **characterized in that** the joint longitudinal center axis (X₄) of the two holding heads (34, 34') extends perpendicularly to a longitudinal direction (X₃) of the butt strap (3) and perpendicularly to a longitudinal center axis (X₂) of the filter insert (2).

4. Air filter according to any one of the claims 1 to 3, **characterized in that** the butt strap (3) is designed of one piece with the filter insert (2), preferably with a face disk (22) on the second face end of the filter insert (2).

5. Air filter according to any one of the claims 1 to 3, **characterized in that** the butt strap (3) is fabricated as a separate single part and connected with the filter insert (2).

6. Air filter according to any one of the preceding claims, **characterized in that** the holding engagement between holding element (33) and counter-holding element (13, 13') is designed as an engagement without play, the pressing arm (15) pressing onto the holding element (33) in an area lying between the holding heads (34, 34'), preferably centrically between the two holding heads (34, 34').

7. Air filter according to any one of the preceding claims, **characterized in that** the connecting tube (12) is provided in the housing cover (11) and that a part (13') of the counter-holding element (13, 13') arranged on the housing cover (11) comprises a latching or clamping element which can be brought into a detachable latching or clamping engagement with the butt strap (3) or its holding element (33).

8. Air filter according to claim 7, **characterized in that** the latching or clamping element on the housing cover (11) is formed by the pressing arm (15).

9. Air filter according to claim 8, **characterized in that** the pressing arm (15) engages in a latching or clamping manner in a slot (35) of suitable width in the butt strap (3) or in its holding element (33).

10. Air filter according to claim 8, **characterized in that** the pressing arm (15) engages in a latching or clamping manner between two edge fins (36') of the butt strap (3) or of the holding element (33), said fins pointing in the direction of the cover (11).

11. Air filter according to any one of the claims 1 to 10, **characterized in that** the butt strap (3) essentially extends towards the outside in radial direction from an outer circumference of the second face disk (22).

12. Air filter according to any one of the claims 1 to 10, **characterized in that** the butt strap (3) extends from an outer circumference of the second face disk (22) initially away from the filter insert (2) in an essentially axial direction, and then towards the inside in an essentially radial direction.

13. Air filter according to any one of the preceding claims, **characterized in that** the butt strap (3) and the housing cover (11) consist of elastic-flexible materials, the material of the butt strap (3) having at least in parts a higher elasticity than the material of the housing cover (11).

14. Air filter according to any one of the preceding claims, **characterized in that** the butt strap (3), seen in its longitudinal direction (X₃), extends in a flat or bent or corrugated manner.

15. Air filter according to any one of the preceding claims, **characterized in that** the butt strap (3) or the second face disk (22) including the butt strap (3) as well as the housing cover (11) consist of plastic, preferably polyamide or polypropylene, and are produced by injection molding.

16. Filter insert (2) for an air filter (1) according to any one of the claims 1 to 15, the filter insert (2) consisting of two face disks (21, 22) and a hollow cylindrical filter cloth body (20) arranged between them, wherein the filter insert (2) comprises a first face end detachably mountable on an air-conducting connecting tube (12) of the air filter (1) and wherein, on a second face end, at least one butt strap (3) is provided which is detachably settable on the filter housing (10) of the air filter (1), wherein the butt strap (3) comprises on its housing-side end a holding element (33) which, by closing the air filter (1), can be brought into holding engagement without tools with a counter-holding element (13, 13') being arranged partly on the housing cover (11) and partly on the remaining filter housing (10) by means of positive locking and/or frictional connection and which, by opening the air filter (1), can be brought out of holding engagement without tools with the counter-holding element (13, 13'),
**characterized in that**
the holding element (33) on the butt strap (3) comprises two holding heads (34, 34') spaced apart from each other.

17. Filter insert according to claim 16, **characterized in that** the holding heads (34, 34') each have the form of a cylinder, the two cylinder-shaped holding heads (34, 34') having a joint longitudinal center axis (X₄).

18. Filter insert according to claim 17, **characterized in that** the joint longitudinal center axis (X₄) extends perpendicularly to a longitudinal direction (X₃) of the butt strap (3) and perpendicularly to a longitudinal center axis (X₂) of the filter insert (2).

19. Filter insert according to any one of the claims 16 to 18, **characterized in that** the butt strap (3) is designed of one piece with the filter insert (2), preferably with a face disk (22) on the second face end of the filter insert (2).

20. Filter insert according to any one of the claims 16 to 18, **characterized in that** the butt strap (3) is fabricated as a separate single part and connected with the filter insert (2).

21. Filter insert according to any one of the claims 16 to 20, **characterized in that** the butt strap (3) or its holding element (33) comprises means with which a latching or clamping element arranged on the housing cover (11) can be brought into a detachable latching or clamping engagement.

22. Filter insert according to claim 21, **characterized in that** a slot (35) of such width is provided in the butt strap (3) or in its holding element (33) that, into it, a pressing arm (15) can detachably engage in a latching or clamping manner, said arm being provided as the latching or clamping element on the housing cover (11) and forming a cover-side part (13') of the counter-holding element (13, 13').

23. Filter insert according to any one of the claims 16 to 22, **characterized in that** the butt strap (3) essentially extends towards the outside in radial direction from an outer circumference of the second face disk (22).

24. Filter insert according to any one of the claims 16 to 22, **characterized in that** the butt strap (3) initially extends in an essentially axial direction from an outer circumference of the second face disk (22) away from the filter insert (2), and then towards the inside in an essentially radial direction.

25. Filter insert according to any one of the claims 16 to 24, **characterized in that** the butt strap (3) consists of an elastic-flexible material.

26. Filter insert according to any one of the claims 16 to 25, **characterized in that** the butt strap (3), seen in its longitudinal direction (X₃), extends in a flat or bent or corrugated manner.

27. Filter insert according to any one of the claims 16 to 26, **characterized in that** the butt strap (3) or the second face disk (22) including the butt strap (3) consists of plastic, preferably polyamide or polypropylene, and is produced by injection molding.

## Revendications

1. Filtre à air (1), en particulier pour l'air aspiré d'un moteur à combustion interne, avec un boîtier de filtre (10) avec un couvercle de boîtier retirable (11) et un élément filtrant (2) remplaçable situé dans le boîtier de filtre (10), lequel élément est constitué par deux disques frontaux (21, 22) et un corps de matière filtrante (20) cylindrique creux situé entre ceux-ci, l'élément filtrant (2) étant maintenu de manière amovible en une première extrémité frontale sur un embout de raccordement conducteur d'air (12), au moins une patte (3) étant prévue en une deuxième extrémité frontale, laquelle patte est fixée de manière amovible sur le boîtier de filtre (10), la patte (3) comportant, en son extrémité située du côté du boîtier, un élément de retenue (33) qui, par fermeture du filtre à air (1), peut être amené, sans outil, en engagement de retenue avec un élément de retenue complémentaire (13, 13') sur le boîtier de filtre (10) par complémentarité de forme et/ou par adhérence et qui, par ouverture du filtre à air (1), peut être retiré, sans outil, de l'engagement de retenue avec l'élément de retenue complémentaire (13, 13'), l'élément de retenue complémentaire (13, 13') étant situé en partie sur le couvercle de boîtier (11) et en partie sur le reste du boîtier de filtre (10) et l'élément de retenue (33) étant fixé entre le couvercle de boîtier (11) et le reste du boîtier de filtre (10) par complémentarité de forme et/ou par adhérence lorsque le filtre à air (1) est fermé,
**caractérisé en ce que**
l'élément de retenue (33) sur la patte (3) comporte deux têtes de retenue (34, 34') espacées l'une de l'autre, **en ce qu'**une partie (13) de l'élément de retenue complémentaire (13, 13') située du côté du boîtier comporte deux creux (14, 14') en forme de cuvette ou de rainure de clavette pour loger les têtes de retenue (34, 34') et **en ce qu'**une partie (13') de l'élément de retenue complémentaire (13, 13') située du côté du couvercle comprend un bras presseur (15) qui, lorsque le couvercle de boîtier (11) est fermé, presse les têtes de retenue (34, 34') dans les creux (14, 14').

2. Filtre à air selon la revendication 1, **caractérisé en ce que** les têtes de retenue (34, 34') présentent chacune la forme d'un cylindre, les deux têtes de retenue cylindriques (34, 34') présentant un axe médian longitudinal (X₄) commun.

3. Filtre à air selon la revendication 2, **caractérisé en ce que** l'axe médian longitudinal commun (X₄) des deux têtes de retenue (34, 34') est perpendiculaire par rapport à un sens longitudinal (X₃) de la patte (3) et perpendiculaire par rapport à un axe médian longitudinal (X₂) de l'élément filtrant (2).

4. Filtre à air selon l'une des revendications 1 à 3, **caractérisé en ce que** la patte (3) est réalisée d'une seule pièce avec l'élément filtrant (2), et de préférence avec un disque frontal (22) à la deuxième extrémité frontale de l'élément filtrant (2).

5. Filtre à air selon l'une des revendications 1 à 3, **caractérisé en ce que** la patte (3) est réalisée en tant que pièce détachée séparée et est reliée à l'élément filtrant (2).

6. Filtre à air selon l'une des revendications précédentes, **caractérisé en ce que** l'engagement de retenue entre l'élément de retenue (33) et l'élément de retenue complémentaire (13, 13') est réalisé sous la forme d'un engagement de retenue sans jeu, le bras presseur (15) faisant pression sur l'élément de retenue (33) dans une zone située entre les têtes de retenue (34, 34'), et de préférence centralement entre les deux têtes de retenue (34, 34').

7. Filtre à air selon l'une des revendications précédentes, **caractérisé en ce que** l'embout de raccordement (12) est prévu dans le couvercle de boîtier (11) et **en ce qu'**une partie (13') de l'élément de retenue complémentaire (13, 13') située sur le couvercle de boîtier (11) comprend un élément d'encliquetage ou de serrage qui peut être amené en engagement amovible par encliquetage ou par serrage avec la patte (3) ou son élément de retenue (33).

8. Filtre à air selon la revendication 7, **caractérisé en ce que** l'élément d'encliquetage ou de serrage sur le couvercle de boîtier (11) est formé par le bras presseur (15).

9. Filtre à air selon la revendication 8, **caractérisé en ce que** le bras presseur (15) s'engage par encliquetage ou par serrage dans une fente (35) d'ouverture adaptée dans la patte (3) ou dans son élément de retenue (33).

10. Filtre à air selon la revendication 8, **caractérisé en ce que** le bras presseur (15) s'engage par encliquetage ou par serrage entre deux rebords (36') de la patte (3) ou de l'élément de retenue (33) tournés vers le couvercle (11).

11. Filtre à air selon l'une des revendications 1 à 10, **caractérisé en ce que** la patte (3) s'étend sensiblement radialement d'un pourtour extérieur du deuxième disque frontal (22) vers l'extérieur.

12. Filtre à air selon l'une des revendications 1 à 10, **caractérisé en ce que** la patte (3), partant d'un pourtour extérieur du deuxième disque frontal (22), s'étend tout d'abord sensiblement axialement en s'éloignant de l'élément filtrant (2), puis sensiblement radialement vers l'intérieur.

13. Filtre à air selon l'une des revendications précédentes, **caractérisé en ce que** la patte (3) et le couvercle de boîtier (11) sont constitués de matières élastiques flexibles, la matière de la patte (3) présentant, au moins en partie, une élasticité supérieure à celle de la matière du couvercle de boîtier (11).

14. Filtre à air selon l'une des revendications précédentes, **caractérisé en ce que** la patte (3), vue dans son sens longitudinal (X₃), est plane, ou pliée, ou ondulée.

15. Filtre à air selon l'une des revendications précédentes, **caractérisé en ce que** la patte (3), ou le deuxième disque frontal (22) y compris la patte (3), ainsi que le couvercle de boîtier (11) se composent de matière plastique, et de préférence de polyamide ou de polypropylène, et sont réalisés dans une technique d'injection.

16. Élément filtrant (2) pour un filtre à air (1) selon l'une des revendications 1 à 15, l'élément filtrant (2) étant constitué par deux disques frontaux (21, 22) et un corps de matière filtrante (20) cylindrique creux situé entre ceux-ci, l'élément filtrant (2) présentant une première extrémité frontale qui peut être maintenue de manière amovible sur un embout de raccordement conducteur d'air (12) du filtre à air (1) et au moins une patte (3) étant prévue en une deuxième extrémité frontale, laquelle patte peut être fixée de manière amovible sur un boîtier de filtre (10) du filtre à air (1), et la patte (3) comportant, en son extrémité située du côté du boîtier, un élément de retenue (33) qui, lors d'une fermeture du filtre à air (1), peut être amené, sans outil, en engagement de retenue avec un élément de retenue complémentaire (13, 13') situé en partie sur le couvercle de boîtier (11) et en partie sur le reste du boîtier de filtre (10) par complémentarité de forme et/ou par adhérence et qui, lors d'une ouverture du filtre à air (1), peut être retiré, sans outil, de l'engagement de retenue avec l'élément de retenue complémentaire (13, 13'),
**caractérisé en ce que**
l'élément de retenue (33) sur la patte (3) comprend deux têtes de retenue (34, 34') espacées l'une de l'autre.

17. Élément filtrant selon la revendication 16, **caractérisé en ce que** les têtes de retenue (34, 34') présentent chacune la forme d'un cylindre, les deux têtes de retenue cylindriques (34, 34') présentant un axe médian longitudinal (X₄) commun.

18. Élément filtrant selon la revendication 17, **caractérisé en ce que** l'axe médian longitudinal commun (X₄) est perpendiculaire par rapport à un sens longitudinal (X₃) de la patte (3) et perpendiculaire par rapport à un axe médian longitudinal (X₂) de l'élément filtrant (2).

19. Élément filtrant selon l'une des revendications 16 à 18, **caractérisé en ce que** la patte (3) est réalisée d'une seule pièce avec l'élément filtrant (2), et de préférence avec un disque frontal (22) à la deuxième extrémité frontale de l'élément filtrant (2).

20. Élément filtrant selon l'une des revendications 16 à 18, **caractérisé en ce que** la patte (3) est réalisée en tant que pièce détachée séparée et est reliée à l'élément filtrant (2).

21. Élément filtrant selon l'une des revendications 16 à 20, **caractérisé en ce que** la patte (3) ou son élément de retenue (33) comporte des moyens permettant d'amener un élément d'encliquetage ou de serrage situé sur le couvercle de boîtier (11) en engagement amovible par encliquetage ou par serrage.

22. Élément filtrant selon la revendication 21, **caractérisé en ce qu'**est prévue, dans la patte (3) ou dans son élément de retenue (33), une fente (35) d'une ouverture telle qu'un bras presseur (15) prévu pour constituer l'élément d'encliquetage ou de serrage sur le couvercle de boîtier (11) et formant une partie (13') de l'élément de retenue complémentaire (13, 13') située du côté du couvercle peut venir en engagement amovible par encliquetage ou par serrage avec celle-ci.

23. Élément filtrant selon l'une des revendications 16 à 22, **caractérisé en ce que** la patte (3) s'étend sensiblement radialement d'un pourtour extérieur du deuxième disque frontal (22) vers l'extérieur.

24. Élément filtrant selon l'une des revendications 16 à 22, **caractérisé en ce que** la patte (3) s'étend tout d'abord sensiblement axialement à partir d'un pourtour extérieur du deuxième disque frontal (22) en s'éloignant de l'élément filtrant (2), puis sensiblement radialement vers l'intérieur.

25. Élément filtrant selon l'une des revendications 16 à 24, **caractérisé en ce que** la patte (3) est constituée d'une matière élastique flexible.

26. Élément filtrant selon l'une des revendications 16 à 25, **caractérisé en ce que** la patte (3), vue dans son sens longitudinal (X₃), est plane, ou pliée, ou ondulée.

27. Élément filtrant selon l'une des revendications 16 à 26, **caractérisé en ce que** la patte (3) ou le deuxième disque frontal (22) y compris la patte (3) se composent de matière plastique, et de préférence de polyamide ou de polypropylène, et sont réalisés dans une technique d'injection.
